# EUROPEAN PATENT APPLICATION

(11) **EP 4 552 787 A1**
(43) Date of publication of application: **14.05.2025**
(21) Application number: 23887807.8
(22) Date of filing: 27.10.2023
(51) Int. Cl.: B23K 26/38, B23K 26/70

(54) **MACHINING METHOD FOR LASER TO CUT MATERIAL, AND USE**

(30) Priority: 10.11.2022 CN 202211409088
(71) Applicant: Shanghai Nagoya Precision Tools Co., Ltd., Shanghai 201801 (CN)
(72) Inventor: SUN, Sirui, Shanghai 201801 (CN)
(74) Representative: Lermer, Christoph
(86) International application number: PCT/CN2023/127409
(87) International publication number: WO 2024/099117

(57) **Abstract**

A method for a laser to cut a material, comprising : driving a material (200) to move along preset paths (310); and a focused laser beam (11, 12, 14, 16) repeatedly moving on the surface of the material (200) to ablate the material (200), thereby forming a two-dimensional pattern (320) oriented to the machining depth such that, as the material (200) moves along the preset paths (310), a plurality of two-dimensional patterns (320) are generated, the two-dimensional patterns (320) being superposed to form a required form. The focused laser beam (11, 12, 14, 16) repeatedly moves along a straight line on the surface of the material (200), or repeatedly moves along the patterns (320). The method remarkably improves the machining efficiency of lasers ablating the materials, and focused laser spots may have higher speeds of movement along machining trajectories, thus improving the machining efficiency.

## Description

### Technical Field

The invention relates to a method for cutting material, specifically to a method for cutting material by laser.

### Background technology

Hole processing, milling processing and reaming processing are common material processing means in the industry, so as to process the material into the product with the desired characteristics, such as: The invention Claims a plate with hole characteristics and a cavity with an arc surface. The most common means for completing these processes are cutters, such as: drill, milling cutter and reamer and so on. The purpose of removing material by means of laser (field) has been widely applied.

For example: The use of focused high-energy laser beams to irradiate the material is common in the field of metal processing, and the material is subjected to a photo-thermoelectric effect in a spatial range in which the energy density of the beam is higher than the damage threshold value of the material (for example, the energy density of the beam is higher than the damage threshold value of the material). Gasification evaporation, electron avalanche and so on) to ablate and remove the material. The ablation of materials of particular shapes, shapes and specifications is then accomplished (also commonly referred to as "cutting") by the movement of the light beam relative to the material. It reaches the purpose of making the needed product.

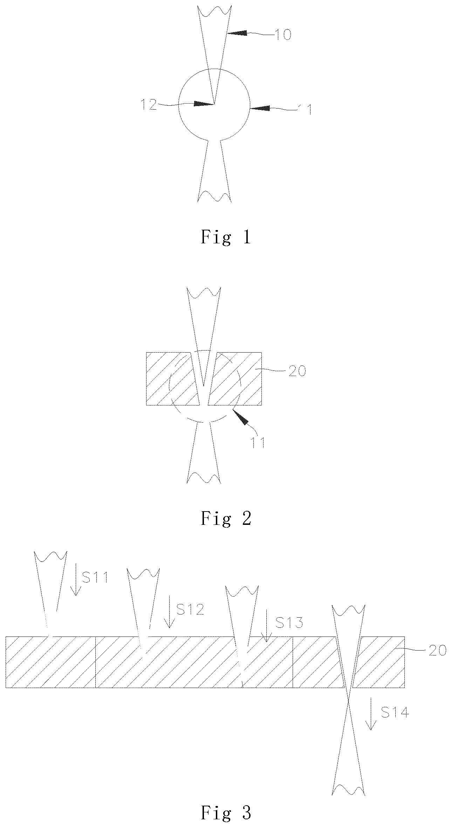

The laser is the light source of the laser for industrial processing. No matter what kind of laser is used, the laser cutting mainly has two techniques of single ablation and multiple ablations according to whether the beam moves back and forth relative to the material or not when processing. Based on the analysis of the laser principle, as shown in FIG. 1, the key parameters of the single ablation process are the effective focal depth 11 of the focused laser beam 10 and the diameter of the focused light spot 12, and the space determined by the two in the focused laser beam is the theoretically effective ablation area of the laser. It can be known based on the optical principle that the smaller the diameter of the focusing light spot is, the higher the energy density is, but the smaller the effective focal depth is under the premise that the laser power is not changed. As shown in FIG. 2, the single ablation process needs to ensure that the effective focal depth of the laser is greater than the thickness of the material 20 so as to satisfy that the laser beam can be effectively ablated on the whole thickness of the material, that is, in order to ablate the thicker material for one time, a larger effective focal depth is needed, However, increasing the effective focal depth results in an increase in the diameter of the focal spot and a decrease in the laser energy density.

In order to maintain the laser energy density at a level exceeding the material damage threshold, the industry has to increase the laser output power, i.e., one of the prior art lines that increase the thick material cutting energy efficiency is to increase the laser output power. The processing efficiency using this technical process route is extremely high, but because the increase of the output power of the laser will cause the heat influence area of the laser to the material to increase, which is easy to cause defects such as material ablation edge thermal damage and so on, therefore, The technical solution is mainly concentrated in the industrial field with low requirement for ablation (cutting) edge precision, such as metal plate and pipe processing.

On the other hand, if the laser device can control the processing depth of the focused laser beam, the material can be repeatedly (layer-by-layer) ablated (cut) along the processing depth direction, as shown in FIG. 3. Since the focused laser beam can be focused to a smaller diameter without being limited by the depth of focus, the requirement for laser power can be greatly reduced, and the laser beam can be ablated for a plurality of times (e.g., ablated for a plurality of times) (e.g., ablated for a plurality of times). S11, S12, S13, and S14) can achieve finer shape processing, less thermal damage, and less edge ablation, which is more controllable than the depth of a single ablation process. However, since the efficiency of multiple ablations is rapidly decreasing as the depth of processing deepened, it is generally difficult to achieve such a control of the large depth of processing of the focused laser beam, and is also uneconomical.

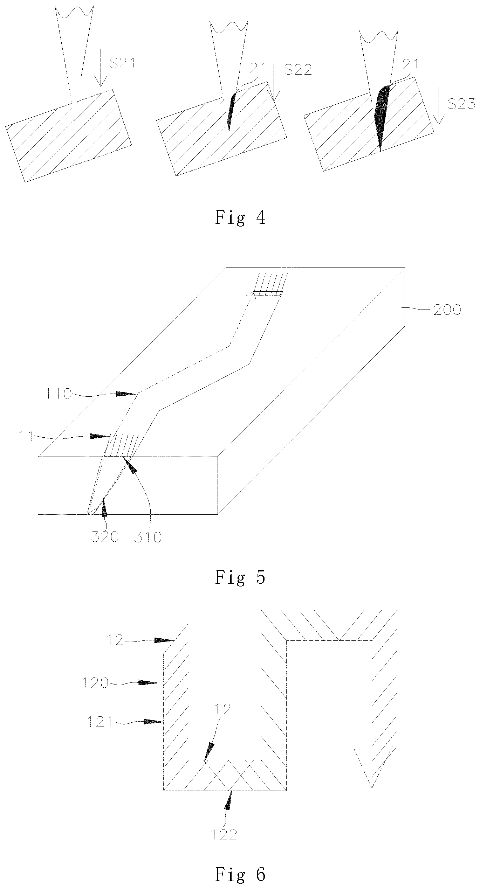

When the material is processed with a focused laser beam, the focused laser beam is typically directed vertically or nearly vertically towards the material-processed surface (as shown in Figs. 2 and 3), so that the cut surface is always of a positive taper. In order to obtain a more vertical tangent plane, or a tangent plane with a certain inverted taper, theoretically, it is necessary to irradiate the focused laser beam to the material in a direction deviated from the vertical incident direction, and perform (obliquely) multiple times of cutting in a manner of inclining to the surface of the material (that is, the surface generated by the laser cutting is required to form an included angle with the surface of the material, For example: The reverse cone angle). As shown in FIG. 4, the focused laser beam carries out S21, S22 and S23 three ablations on the material, and as the processing depth increases, the part of the focused laser beam that is inclined to the material will inevitably be shielded by the material 21 on the laser path (for example: The edge of the slit) and results in the actual effective power of the focused spot rapidly falling below the threshold required for ablation of the material, without completion of ablation, and the greater the depth of processing, the more severe the power at the focused spot is falling.

The ablation area of the laser beam on the surface layer of the material can be widened so as to slow down or eliminate the laser effective power reduction caused by the shielding of the material in the subsequent deeper processing. Thus, when the (tilted) multi-ablation process is performed in a manner inclined to the surface of the thick material, the multi-ablation in the width direction of the ablation will result in a further multi-reduction of the processing efficiency, except that the multi-machining in the depth direction results in a double reduction of the processing efficiency. so as to increase the thickness and processing depth of the material, the processing efficiency of the layer-by-layer multi-ablation process from the surface of the material to the maximum required processing depth will be exponentially reduced compared with the single ablation process efficiency, so this process route is mainly applied to laser engraving, the skin deep carving and other related fields for processing the surface of the material.

In summary, in order to achieve efficient precise cutting of thick material (thickness is greater than 0.5 mm), further technical means are required, such as: The invention reduces the damage threshold of the material (the ultra-fast light source such as picosecond or femtosecond is used as the technical means to shorten the laser pulse width, or the ultraviolet or extreme ultraviolet light source is used as the technical means to improve the absorptivity of the material), or changes the technique to reduce the influence of the material to the laser beam shielding. For example: The two-dimensional circular or annular motion of the light spot is superposed while the focusing laser light spot moves along the processing path by the motion component such as the rotating mechanism. For example: as described in CN202210007485.1, the polarization and focal length of the laser beam are further superposed while the two-dimensional motion of the spot is superposed to increase the ablation depth and the ablation range of the single ablation in the multiple ablations, so as to reduce the number of reciprocating processing and improve the processing efficiency. However, these techniques often require expensive light sources (such as: a femtosecond laser, an extreme ultraviolet laser, etc.) and a precise complex hardware (e.g., a femtosecond laser, an extreme ultraviolet laser, etc.); the dynamic focusing device and the dynamic polarizing device and the like), and the reliability of the system is reduced (for example, the dynamic focusing device and the dynamic polarizing device and the like). more complex temperature control and beam pointing control, more complex mechanical electric structure).

### SUMMARY

An objective of the present invention is to provide a method for laser cutting materials, which improves the processing efficiency of laser cutting of thick materials, such as: The precision cutting processing efficiency of polycrystalline diamond composite sheet with thickness more than 0.5 mm is improved.

Another objective of the present invention is to provide a method for laser cutting of a material, which can obtain a high-precision geometry while laser cutting of a thick material with high efficiency, such as: It has tangent plane with precise back taper angle, hole with good column degree and groove with vertical side wall and so on.

It is commonly understood that the laser is the light emitted by the atoms due to the excitation, and the electrons in the atoms absorb energy and then transit from the low energy level to the high energy level, and then fall back from the high energy level to the low energy level, and the released energy is released in the form of photons. The shape of the laser can be divided into continuous laser and pulse laser. The laser is divided into hot laser and cold laser according to the pulse width characteristic of the laser.

A laser emitter such as: but not limited to nanosecond, femtosecond or picosecond laser, the generated laser such as: infrared, infrared, blue light, green light, purple light or polar purple light.

The ultra-fast laser is the pulse laser whose pulse width of the output laser is less than ten nanoseconds, that is, picosecond level or less than picosecond level. The ultra-fast laser involves a core component including an oscillator, a stretcher, an amplifier and a compressor.

In machining, the material or workpiece is generally a material or semi-finished product for the manufacture of parts or parts, and is an object of machining during machining. That is, after machining the work piece, the product meeting the machining or design requirement is obtained.

Precision processing, the processing precision and the surface quality reach the high degree processing technology. For example: in the cutter processing, the size, straightness, profile, surface roughness, blade tip circular arc radius and processing precision are all higher than the micron level.

In the laser processing, the laser removes the material by means of ablation, that is, after the material of the initial surface layer is removed, a new interface is again presented as the surface of the material to be exposed, the laser continues to ablate the material on the new interface again, so as to reciprocate, so as to realize the removal of more material, The processing of the shape of the material is achieved (for example: cutting). Therefore, in the laser processing, the laser always acts on the surface of the material and ablates the material on the surface (surface layer).

A machining apparatus (or machining centre) is a machining apparatus having a plurality of moving shafts. That is, in the right-hand rectangular coordinate system, the X, Y and Z axes moving along the straight line direction, and the A, B and C axes rotating around the X, Y and Z axes, respectively.

Machine processing equipment, such as: The numerical control machine tool is usually loaded with various control software and receives and sends various instructions in the form of code to automatically process the workpiece.

A method for cutting material by laser, comprising the following steps: driving the material to move along a preset path (namely a processing track), and repeatedly moving the focused laser beam on the surface of the material; wherein,
using the direction of the focused laser beam inclining to the surface of the material to act on the material, performing ablation on the material along the set track, and repeatedly moving at the two ends of the track, so as to form a two-dimensional pattern along the processing depth surface, along with the movement of the material along the preset path, as a result, a large number of two-dimensional patterns facing along the processing depth are generated, and these two-dimensional patterns are superimposed in the direction in which the material moves to form a desired shape (typically a three-dimensional shape). holes and grooves, or even a piece of material is cut and divided into several parts.

The trajectory of the repeated movement of the focused laser beam on the surface of the material is a straight line segment, or a pattern comprising at least one intersection angle of less than 90 degrees formed by the intersection of two straight line segments. The so-called graphic, such as: but not limited to triangle, rhombus and trapezoid and so on. In order to be good for the processing of the needed shape and to meet the requirement of improving the processing precision, the closed pattern of the invention is preferably triangular.

The power of the laser is limited, or when the thickness of the material to be processed is large, it is generally necessary to continue stacking the aforementioned two-dimensional pattern in the direction of the depth of the process. At this time, the depth of the laser processing can be continuously increased by reciprocating the material, or the material is returned to the starting point of the processing, the laser processing solution is continuously executed along the processing depth direction, and another batch of two-dimensional patterns are continuously generated along the depth direction.

The device for driving the material generally provides at least two directions of motion, for example, an X-axis direction motion and a Y-axis direction motion. If necessary, movement in the Z-axis direction should also be provided. According to the need of the desired form of processing, the device for driving the material also typically comprises a movement (i.e., an A-axis direction) in the direction of rotation about the X-axis, and a movement (i.e., a B-axis direction) in the direction of rotation about the Y-axis.

In order to obtain a focused laser light source for carrying out the method of the present invention, a laser should be provided as a light source, and a focused (field) mirror focuses the received laser light to obtain a focused laser light beam. In addition, in order to make the focused laser beam form a two-dimensional pattern facing along the processing depth, a driving device is needed to guide or drive the focused laser beam to repeatedly move along a straight line, or to repeatedly move along a pattern formed by connecting several straight line sections end to end.

With the help of the galvanometer, the deflection of the laser beam can be controlled so that the light spot moves on the working plane, and the focused laser beam can finish the motion track along a pattern in a short time. or the focusing laser beam is driven by the rotating mechanism to finish the movement track along a pattern.

When the track is a straight line section, only one end of the straight line section is located on the moving preset path of the material. when the track is a pattern with an included angle, the end point of the included angle is located on the moving preset path of the material.

When the focusing laser light spot is on the track of the preset path, the position is used as the rotating centre to adjust the moving direction of the focusing laser light beam. Therefore, the moving direction of the focused laser beam is adapted to the change of the preset track, and the included angle with the normal of the preset track is always kept in the range of 20 degrees to 70 degrees, especially the moving direction of the focused laser beam is always kept in the normal of the processing track.

With the increase of the processing depth, the total length of the linear motion of the light spot is continuously reduced, and the moving speed of the focusing light spot moving track along the preset track is continuously improved.

The method of the present invention is applied to a processing apparatus having a plurality of moving axes (e.g. the three-axis machine tool, the four-axis machine tool and the five-axis machine tool are beneficial for realizing the automatic laser cutting process of the material with the help of the numerical control system.

The beneficial effects of the technical solution of the invention are as follows:
In comparison with the prior art, the method for cutting material by laser provided by the invention superposes the straight line or angular pattern of the light spot when the focusing light spot moves along the processing track (such as: the movement of the laser ablation material is triangular or fan-shaped, so the processing efficiency of the laser ablation material is obviously improved, that is, the moving speed of the focusing light spot along the processing track can be higher, and the processing efficiency can be higher.

When the circular motion track is overlapped, the centre of the light spot is the centre of the light spot motion, the offset compensation is performed according to the circular radius when the light spot motion track is calculated, and the compensation and offset direction are considered in the actual working condition, which will complicate the calculation. Compared with this, the technical solution of the present invention uses a straight line or an angle-containing pattern (for example, a straight line or an angle-containing pattern). one end of the triangular or fan-shaped) motion track is the contact point of the pattern and the track, so as to adapt to the situation of the change of the processing track, which is equivalent to only using a single focusing light spot to move along the processing track, so there is no need to perform additional offset compensation when calculating the light spot moving track, which simplifies the related algorithm, The invention reduces the programming difficulty and the computer performance requirement and improves the operation speed.

When the circular motion track is overlapped and the central symmetrical motion track is used, the centre of the light spot is actually in the centre of the circular motion, after the light spot is shifted according to the circular radius, the processing track is changed to be less than the circular motion radius, and the concave shape cannot be processed. In contrast, the method of the present invention is described in a straight line or an angle-containing pattern (for example, a straight line or an angle-containing pattern). one end of the movement track is a rotation centre so as to adapt to the change of the processing track, which is equivalent to only using single light spot to move along the processing track, realizing the detail processing of the needed shape, improving the processing precision.

Compared with the prior art, the method of the present invention can adjust and reduce a straight line or an angular pattern (e.g., a straight line or an angular pattern) as the processing depth increases. triangle) movement track total length, so as to make use of the characteristic that the ablation width can be reduced along with the increase of the processing depth so as to form the " joint cutting ".

### BRIEF DESCRIPTION OF THE DRAWINGS

FIG. 1 is a schematic diagram of a focused laser beam;
FIG. 2 is a schematic diagram of one embodiment of a single ablation process performed on a material with a focused laser beam;
FIG. 3 is a schematic diagram of an embodiment in which the focused laser beam performs multiple ablation processes on the material along the processing depth direction;
FIG. 4 is a schematic diagram of an embodiment in which the focused laser beam is inclined to the surface of the material and the material is subjected to multiple ablation processes;
FIG. 5 is a schematic diagram of an embodiment of laser processing of a material by using the method of the present invention;
FIG. 6 is a schematic diagram of another embodiment of the laser processing of the material according to the method of the present invention;
FIG. 7 is a schematic diagram of another embodiment of laser processing of a material by using the method of the present invention;
FIG. 8 is a schematic diagram of another embodiment of laser processing of a material by using the method of the present invention;
FIG. 9 is a schematic diagram of another embodiment of laser processing of a material by using the method of the present invention;
FIG. 10 is a schematic diagram of another embodiment of laser processing of a material according to the method of the present invention;
FIG. 11 is a schematic diagram of another embodiment of laser processing of a material by using the method of the present invention;
FIG. 12 is a schematic diagram of an embodiment of laser processing of a material using a circular pattern; and
FIG. 13 is a schematic diagram of an embodiment of laser processing of a material using a circular pattern.

### DETAILED DESCRIPTION

The technical solution of the present invention is described in detail with reference to the accompanying drawings. Embodiments of the present invention are intended only to illustrate and not to limit the technical solution of the present invention. Although the present invention is described in detail with reference to preferred embodiments, those of ordinary skill in the art should understand that modifications or equivalent substitutions may be made to the technical solution of the present invention without departing from the spirit and scope of the technical solution of the present invention, and should all be covered within the scope of the claims of the present invention.

In order to implement the method of the present invention, it is more suitable for a processing apparatus having a plurality of moving shafts, such as: The three-axis machine tool, the four-axis machine tool and the five-axis machine tool are implemented. Such processing equipment can provide at least two directional movements required to drive the material, such as: The motion in the X-axis direction and the motion in the Y-axis direction are provided, and the motion in the Z-axis direction is generally also provided to meet the processing requirements. In order to realize the processing of the three-dimensional form, the movement around the X axis rotation direction (i.e., the A axis direction), and the movement around the Y axis rotation direction (i.e., the B axis direction) can also be easily obtained from these processing devices.

Since there is already a processing apparatus carrying a laser light source and having a plurality of moving axes, for example, CN212144994. These devices are already equipped with lasers. a focusing (field) mirror and a driving device, so that the received laser can be focused to obtain a focused laser beam, and the focused laser beam is guided or driven by the driving device to repeatedly move along a straight line, or at least comprises a pattern formed by two straight line segments intersecting with each other at an intersection angle of less than 90 degrees. or repeated movement along the closed pattern formed by several straight line sections connected end to end. For example: when the track is a straight line section, the focused laser beam repeatedly moves between the two ends of the track. when the track is a triangular pattern, the focused laser beam repeatedly moves along the closed track formed by three sides of the triangle. The track is a pattern formed by intersection of two straight line segments at an angle of less than 90 degrees, and the focused laser beam moves repeatedly only along the track formed by the two sides.

With the help of the galvanometer, the focusing light spot moves on the working plane, and the focusing laser beam can finish the moving track along a pattern in a short time, or drive the focusing laser beam to finish the moving track along a pattern through the rotating mechanism.

FIG. 5 is a schematic diagram of an embodiment of laser processing of a material by using the method of the present invention. As shown in FIG. 5, the laser ablates the workpiece 200 (i.e., the material) along the processing track 110, and the arrow on the processing track 110 indicates the direction in which the workpiece 200 moves. During this period, the focused laser beam 11 is moved from one end to the other end along a linear path 310 on the surface of the workpiece 200 for repeated movement, with only one end falling on the processing track 110 where the workpiece 200 is moved. The focused laser beam 11 then ablates the workpiece 200 from the surface of the workpiece 200 along the depth of processing. As the processing depth increases, the total length of the rectilinear motion of the focusing light spot is continuously reduced, the moving speed of the focusing light spot along the preset track is continuously increased, and a two-dimensional pattern 320 with the rectilinear path 310 as the upper boundary is generated. Such laser processing can generally be completed in a short time, the workpiece 200 moves along the processing track 100, thereby producing a plurality of two-dimensional patterns similar to the initially obtained two-dimensional pattern 320, these two-dimensional patterns are superimposed along the moving direction of the workpiece 200 to form a desired three-dimensional shape, For example: hole and groove and so on. When the laser beam 11 is continuously ablated from one side of the workpiece 200 to the opposite side, the workpiece 200 is divided into two parts, so that the workpiece 200 can be divided into several parts.

The above-described two-dimensional pattern 320 can be completed several times in the direction of the processing depth when the power of the laser is limited or the thickness of the processed material is large. That is, a part of the two-dimensional pattern 320 to be processed first, and then another part of the two-dimensional pattern 320 to be processed along the direction of the processing depth are continuously processed, and these patterns constituting the two-dimensional pattern 320 are arranged and stacked along the direction of the processing depth to constitute a complete two-dimensional pattern 320. In order to realize such a processing scheme, a part of the two-dimensional pattern 320 can be firstly processed, the other part of the two-dimensional pattern 320 processed by the depth of the laser processing is continuously increased by means of reciprocating the workpiece 200, or the workpiece 200 is returned to the starting point of the processing, The laser processing scheme as shown in FIG. 5 is then continued along the processing depth direction, and a portion of the two-dimensional pattern 320 is further processed along the depth direction, thereby producing a two-dimensional pattern 320 which is complete along the processing depth.

FIG. 6 is a schematic diagram of another embodiment of the laser processing of the material implemented by the method of the present invention. Referring to FIG. 5, as shown in FIG. 6, the focused laser beam 12 ablates the workpiece (not shown) along the processing track 120, with only one end falling on the processing track 120 where the workpiece moves, and the arrow on the processing track 120 indicates the direction in which the workpiece moves. The included angle between the focused laser beam 12 and the normal of the processing track 120 is kept in the range of 20 ° to 70 °. When one section of track 121 on the processing track 120 turns to the other section of track 122, in order to adapt to the change of the processing track, the focused laser beam 12 is rotated around the laser spot on the processing track 122 as the center, so as to adjust the moving direction of the laser beam.

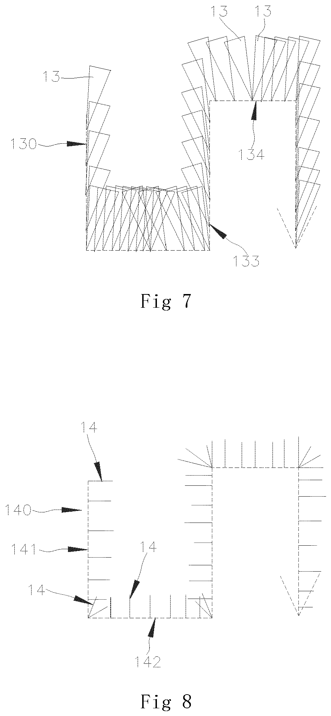

FIG. 7 is a schematic diagram of another embodiment of the laser processing of the material according to the method of the present invention. Referring to FIG. 5, as shown in FIG. 7, the light spot moves on the working plane, and the movement track along a triangle (or sector) can be completed in a short time. The triangular (or fan-shaped) pattern 13 formed by the laser beam focused thereby ablates the workpiece (not shown) along the processing track 130, the arrow on the processing track 130 indicating the direction of movement of the workpiece. The included angle between the triangular pattern 13 and the normal direction of the processing track 130 is kept in the range of 20 ° to 70 °. The end point of one corner of the triangular (or fan-shaped) pattern 13 falls on the processing track 130 where the workpiece moves. when one section of track 133 on the processing track 130 turns to the other section of track 134, in order to adapt to the change of the processing track, the triangular (or fan-shaped) pattern 13 is rotated around the laser spot on the processing track 134 as the centre, The movement direction of the triangular (or fan-shaped) pattern 13 formed by the laser beam is adjusted.

FIG. 8 is a schematic diagram of another embodiment of laser processing of a material using the method of the present invention. Referring to FIG. 5, as shown in FIG. 8, the focused laser beam 14 ablates a workpiece (not shown) along a processing track 140, with only one end falling on the processing track 140 in which the workpiece moves, and the arrow on the processing track 140 indicates the direction in which the workpiece moves. The focused laser beam 14 is maintained in the normal direction of the process trajectory 140. When one section of track 141 on the processing track 140 turns to the other section of track 142, in order to adapt to the change of the processing track, the focused laser beam 14 is rotated around the laser spot on the processing track 142 as the centre, so as to adjust the moving direction of the laser beam.

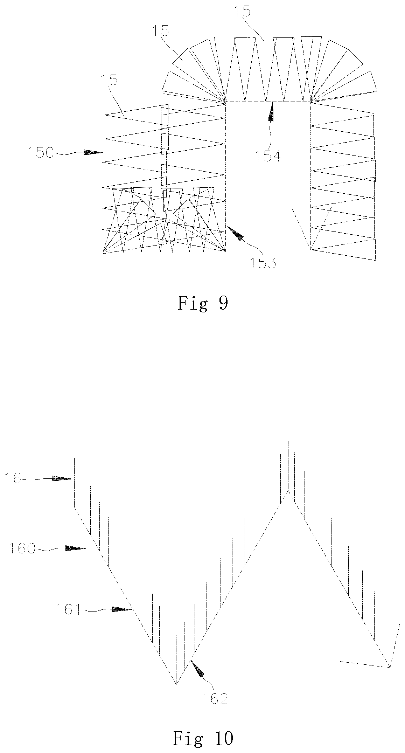

FIG. 9 is a schematic diagram of another embodiment of laser processing of a material by using the method of the present invention. Referring to FIG. 5, as shown in FIG. 9, the light spot moves on the working plane, and the movement track along a triangle (or sector) can be completed in a short time. The triangular (or fan-shaped) pattern 15 formed by the laser beam focused in this way ablates the workpiece (not shown) along the processing track 150, the arrow on the processing track 150 indicating the direction of movement of the workpiece. The end point of one corner of the triangular pattern 15 is located on the processing track 150 where the workpiece moves. The triangular (or fan-shaped) pattern 15 maintains the normal direction of the machining trajectory 150. when one section of track 153 on the processing track 150 turns to the other section of track 154, in order to adapt to the change of the processing track, the triangular (or fan-shaped) pattern 15 is rotated around the laser spot on the processing track 154 as the centre, The movement direction of the triangular (or fan-shaped) pattern 15 formed by the laser beam is adjusted.

FIG. 10 is a schematic diagram of another embodiment of laser processing of a material by using the method of the present invention. Referring to FIG. 5, as shown in FIG. 10, the focused laser beam 16 ablates the workpiece (not shown) along the processing track 160, with only one end falling on the processing track 160 where the workpiece moves, and the arrow on the processing track 160 indicates the direction of the movement of the workpiece. The angle between the focused laser beam 16 and the normal of the processing track 160 is kept in the range of 20 ° to 70 °. Although the process trajectory changes when one trajectory 161 on the process trajectory 160 turns to the other trajectory 162, the focused laser beam 16 can be processed without changing the direction of movement.

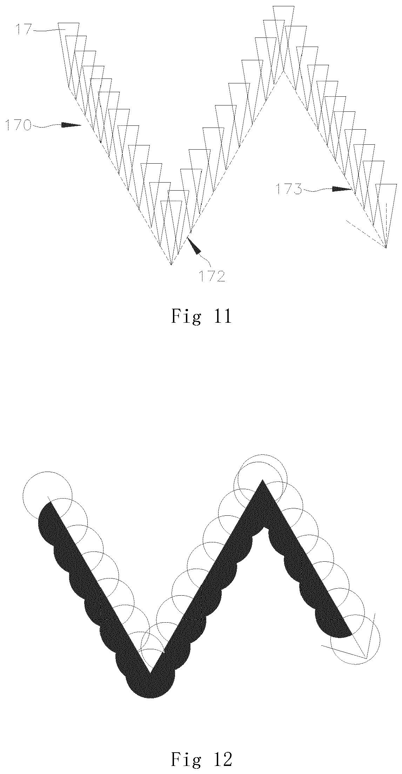

FIG. 11 is a schematic diagram of another embodiment of the laser processing of the material according to the method of the present invention. Referring to FIG. 5, as shown in FIG. 11, the light spot moves on the working plane, and the movement track along a triangle (or sector) can be completed in a short time. The triangular (or fan-shaped) pattern 17 formed by the laser beam focused in this way ablates the workpiece (not shown) along the processing track 170, the arrow on the processing track 170 indicating the direction of movement of the workpiece. The end point of one corner of the triangular (or fan-shaped) pattern 17 is located on the machining track 170 of the workpiece movement. The included angle between the triangular (or fan-shaped) pattern 17 and the normal direction of the processing track 170 is always kept in the range of 20 ° to 70 °. Although the change in the processing trajectory is made when one segment of trajectory 172 on the processing trajectory 170 is turned to another segment of trajectory 173, the processing of the triangle (or sector) pattern 17 can also be achieved without a change in the direction of movement.

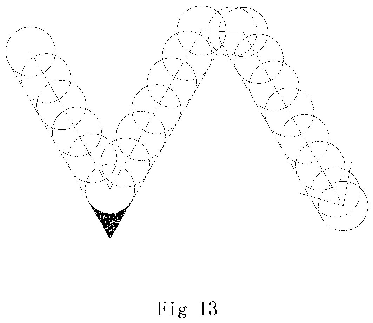

FIG. 12 is a schematic diagram of an embodiment of laser processing using a circular pattern to implement a material, and FIG. 13 is a schematic diagram of an embodiment of laser processing using a circular pattern to implement a material. As shown in FIG. 12, the center of the focusing spot is the center of the circular motion, and if the center of the circular motion falls on the processing track, the transition ablation of the edge of the workpiece is caused, and the processing precision is reduced. If the circle centre is parallel to the processing track, so that the edge of the focusing light spot ablates the work piece, calculating the moving track of the light spot, performing offset compensation according to the circular radius, there are multiple conditions in the actual working condition which need to respectively consider the compensation and offset direction, which will complicate the calculation. In addition, when the processing track changes less than the radius of the circular motion, the concave shape cannot be ablated, and the processing precision is also reduced, as shown in FIG. 13.

## Claims

1. A method for cutting material by laser, comprising the following steps: driving the material (200) to move along a preset path (310), and repeatedly moving the focused laser beam (11, 12, 14, 16) on the surface of the material (200); wherein the focusing laser beam (11, 12, 14, 16) acts on the material in the direction inclined to the surface of the material (200), ablating the material (200) along the set track (110, 120, 130, 140, 150, 160, 170), and repeatedly moving at the two ends of the track (110, 120, 130, 140, 150, 160, 170), so as to form a two-dimensional pattern (320) facing along the processing depth, along with the movement of the material (200) along the preset path (310), generating multiple two-dimensional patterns (320) facing along the processing depth, wherein the two-dimensional patterns (320) are overlapped to form a needed shape; the track (110, 120, 130, 140, 150, 160, 170) of the repeated movement of the focused laser beam (11, 12, 14, 16) is a straight line section, or at least comprises a pattern formed by crossing two straight line sections with an intersection angle less than 90 degrees; when the track (110, 120, 130, 140, 150, 160, 170) is a straight line section, only one end of the track (110, 120, 130, 140, 150, 160, 170) is located on the moving preset path (310) of the material (200); when the track (110, 120, 130, 140, 150, 160, 170) is a pattern with an included angle, the end point of the included angle is located on the moving preset path (310) of the material (200).

2. The method according to Claim 1, wherein the pattern is selected from the group consisting of triangle, rhombus and trapezoid.

3. The method according to Claim 1, wherein the device for driving the material generally provides at least two movement directions.

4. The method according to Claim 1, wherein when the focusing laser light spot is located on the track (110, 120, 130, 140, 150, 160, 170) of the preset path (310), the moving direction of the focusing laser light beam is adjusted by taking the position as the rotating centre.

5. The method according to Claim 1, wherein the moving direction of the focusing laser beam (11, 12, 14, 16) is adapted to the change of the preset track, and the included angle with the normal of the preset track is always kept in the range of 20 degrees to 70 degrees.

6. The method according to Claim 1, wherein the moving direction of the focusing laser beam (11, 12, 14, 16) is adapted to the change of the preset track; and the moving direction of the focusing laser beam (11, 12, 14, 16) is always kept in the normal direction of the processing track.

7. The method according to Claim 1, wherein along with the increase of the processing depth, the total length of the linear motion of the focusing light spot is continuously reduced, the moving speed of the focusing light spot along the preset track is continuously improved.

8. The method according to Claim 1, wherein the pattern is formed by controlling the deflection of the laser beam (11, 12, 14, 16) with a galvanometer.

9. The method according to Claim 1, wherein it is used for the processing device with a plurality of moving shafts.

10. The method according to Claim 9, wherein the processing device is a laser processing device.
